# EUROPÄISCHE PATENTANMELDUNG

(11) **EP 1 983 483 A1**
(43) Veröffentlichungstag der Anmeldung: **22.10.2008**
(21) Anmeldenummer: 08154251.6
(22) Anmeldetag: 09.04.2008
(51) Int. Cl.: G06Q 30/00, G06Q 10/00

(54) **Verfahren, System und Computerprogramm zur Ermöglichung einer verbesserten Darstellung von Information in einer elektronischen Zeitschrift**

(30) Priorität: 13.04.2007 DE 102007017896
(71) Anmelder: Konradin Medien GmbH, 70771 Leinfelden-Echterdingenk (DE)
(72) Erfinder: Lindner, Ralph, 70794 Filderstadt (DE)
(74) Vertreter: Bongen, Renaud & Partner

(57) **Zusammenfassung**

Die Erfindung betrifft ein Verfahren zur Ermöglichung einer verbesserten Darstellung von Information in einem E-Paper (1), das eine E-Zeitschrift (2) mit umblätterbaren Seiten beinhaltet, wobei das E-Paper (1) über eine Datenleitung oder über das Internet gesendet werden kann und von einem Datenprozessor verarbeitet wird, so dass es auf einem Display eines E-Paper (1) empfangenden Computersystems dargestellt werden kann. Das Verfahren umfasst das Aufteilen des E-Paperdisplays in mehrere Felder, wonach die E-Zeitschrift (2) in einem ersten Feld (3) eingefügt wird und mindestens ein zweites Feld (4) zur Darstellung von Information bezüglich eines Unternehmens vorgesehen wird, wobei das erste Feld (3) von dem mindestens einen zweiten Feld (4) wenigstens teilweise überlagert wird.

## Beschreibung

Die Erfindung betrifft ein Betriebsverfahren, ein System und ein Computerprogramm zur Ermöglichung einer verbesserten, insbesondere ergänzenden Darstellung von Information in einem E-Paper, das eine E-Zeitschrift beinhaltet.

Der Begriff "E-Zeitschrift" (elektronische Zeitschrift) umfasst im Folgenden die elektronische Darstellung einer echten Zeitschrift, Fachzeitschrift, Zeitung oder ähnlichem, jeweils in Gänze oder als Zusammenstellung in einer Sonderausgabe ("Special") oder in Auszügen. Der Begriff "E-Paper" kann aber auch andere Gegenstände umfassen, die mit der E-Zeitschrift auf einer Anzeigeneinheit dargestellt werden.

Eine E-Zeitschrift ist eine elektronische Darstellung einer gedruckten Zeitschrift oder ähnlichem, die mittels einer Datenleitung gesendet und auf einer Anzeigeneinheit, z.B. Monitor oder dergleichen, darstellbar ist. Eine E-Zeitschrift sieht üblicherweise wie eine echte Zeitschrift, Fachzeitschrift, Zeitung oder ähnliches aus. Sie ist normalerweise mit geeigneten Tools, z.B. Javascript und Cascading Style Sheets, interaktiv ausgestaltet, so dass die E-Zeitschrift z.B. umgeblättert werden kann.

E-Zeitschriften können auch elektronische Fachzeitschriften sein, die Information über Produkte oder Firmen beinhalten. Möglich sind hierbei sowohl Beiträge, die verschiedene Produkte oder Firmen diskutieren, als auch Anzeigen für Produkte. Diese E-Zeitschriften können kostenlos verteilt oder von Kunden abonniert werden, die die E-Zeitschrift per E-Mail erhalten.

E-Zeitschriften werden wegen geringer Verteilungskosten, einfacher Nutzung und guter Zugänglichkeit immer häufiger im Bereich Marketing verwendet.

Es wäre für ein Unternehmen vorteilhaft, von dem ein bestimmtes Produkt in einer E-Fachzeitschrift präsentiert wird, diese E-Fachzeitschrift an seine Kunden per E-Mail als E-Paper senden zu können, wobei zusätzliche Informationen bezüglich des Unternehmens in dem E-Paper strategisch angeordnet werden können, wodurch die Aufmerksamkeit auf die Produkte oder Dienste des Unternehmens gelenkt wird. Es wäre auch vorteilhaft für ein Unternehmen, das seine Produkte oder Dienste mit einer anerkannten Zeitschrift, Fachzeitschrift, Zeitung oder ähnlichem in Verbindung bringen möchte, an potenzielle Kunden ein E-Paper per E-Mail senden zu können, das die Zeitschrift, Fachzeitschrift, Zeitung oder ähnliches in elektronischer Form beinhaltet, wobei Information über Produkte, Dienste oder Information über die Firma strategisch im E-Paper angeordnet sind. Somit kann das Unternehmen den guten Ruf der Zeitschrift, Fachzeitschrift oder Zeitung nutzen, um z.B. den Absatz der Produkte zu erhöhen und der Verlag der Zeitschrift, Fachzeitschrift oder Zeitung kann die Verteilung der Zeitschrift, Fachzeitschrift oder Zeitung verbessern. Das E-Paper wirkt im Wesentlichen als eine Referenz für das Unternehmen, so dass die Produkte oder Dienste des Unternehmens den Kunden mehr ansprechen. Auf diese Weise kann das Prinzip der Referenz-Werbung aufgegriffen werden. Die E-Zeitschrift bzw. ihr echtes Pendant dient als Referenz für das Unternehmen, das durch zusätzliche Informationen über das E-Paper in Verbindung mit der E-Zeitschrift präsentiert wird. Hierzu integriert das jeweilige Unternehmen seine Produkte, Dienstleistungen und Alleinstellungsmerkmale in das E-Paper, das als Referenz auf der E-Zeitschrift basiert, die eine renommierte Fachzeitschrift oder Titelmarke repräsentiert.

Um die Aufmerksamkeit auf bestimmte Produkte oder Dienste in einem E-Paper zu richten oder ein Unternehmen zusammen mit einer E-Zeitschrift zu präsentieren, muss ein technisches Problem gelöst werden. Wie oben erwähnt, ähnelt eine E-Zeitschrift einer echten gedruckten Zeitschrift, dass heißt, dass eine E-Zeitschrift das Layout einer Zeitschrift besitzt und dass sie z.B. mit einem Mausklick umgeblättert werden kann. Mit der Beibehaltung der Funktionalität der E-Zeitschrift ist es jedoch problematisch, den Fokus eines Benutzers der E-Zeitschrift auf die Produkte oder Dienste des Unternehmens auszurichten. Vor allem kann die E-Zeitschrift viele Information beinhalten, die einen potenziellen Kunden von Informationen bezüglich des Unternehmens ablenken. Der Erfindung liegt die Aufgabe zugrunde, dieses Problem zu lösen.

Erfindungsgemäß wird dieses Problem durch ein Verfahren, ein System, ein Computerprogramm und ein Aufnahmemedium mit den Merkmalen der unabhängigen Ansprüche gelöst. Vorteilhafte Weiterbildungen des erfindungsgemäßen Verfahrens, Systems, Computerprogramms und Aufnahmemediums ergeben sich aus den abhängigen Ansprüchen.

Erfindungsgemäß wird ein Betriebsverfahren für eine Datenverarbeitungsanlage zur Ermöglichung einer verbesserten Darstellung von Information in einem E-Paper vorgesehen, das eine E-Zeitschrift mit umblätterbaren Seiten beinhaltet, wobei das E-Paper über eine Datenleitung oder über das Internet gesendet werden kann und von einem Datenprozessor verarbeitet wird, so dass es auf einem Display eines E-Paper empfangenden Computersystems dargestellt werden kann. Das Verfahren umfasst das Aufteilen des E-Paperdisplays in mehrere Felder, wonach die E-Zeitschrift in einem ersten Feld eingefügt ist und mindestens ein zweites Feld zur Darstellung von Information bezüglich eines Unternehmens bereitgestellt wird, wobei das erste Feld von dem mindestens einen zweiten Feld wenigstens teilweise überlagert wird. Das E-Paper ist so auf das Unternehmen angepasst. Insoweit handelt es sich hierbei um ein "customised e-paper"

Die E-Zeitschrift funktioniert normal, d.h. die Zeitschrift kann mit beispielsweise einem Mausklick umgeblättert werden. Das Verfahren, wonach eine E-Zeitschrift mit umblätterbaren Seiten mit mindestens einem Informationsfeld überlagert wird, ermöglicht es einem Benutzer des E-Papers, die wichtigste Information am schnellsten zu finden und gleichzeitig die E-Zeitschrift zu benutzen.

Das mindestens eine zweite Feld beinhaltet vorzugsweise Information über ein Unternehmen oder seine Produkte oder Dienste. Die Information kann z.B. in Form von Text, Bild, Graphiken, Video, Audio oder einer Kombination derselben bestehen. Zusätzlich können visuell dargestellte Informationen optional durch Musik hinterlegt und dramatisiert werden. Denkbar ist auch eine Ergänzung visuell dargestellter Informationen durch gesprochene Zusatzinformationen.

In einer Ausführungsform wird die E-Zeitschrift völlig oder teilweise ausgeblendet, so dass die Information in dem mindestens einen zweiten Feld auf einem Display prominent dargestellt ist. Dies ermöglicht es dem Benutzer des E-Papers die wichtige Information schnellstmöglich zu finden.

In einer Weiterbildung ist die Information im ersten Feld unveränderbar, d.h. dass die E-Zeitschrift vom Empfänger des E-Papers nicht verändert werden kann, und dass das Urheberrecht der E-Zeitschrift geschützt ist.

Weitere Vorteile und Ausgestaltungen der Erfindung ergeben sich aus der nachfolgenden Beschreibung und den beiliegenden Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand mehrerer Ausführungsbeispiele in den Figuren schematisch dargestellt und wird im Folgenden unter Bezugnahme auf die Figuren ausführlich beschrieben.
Figur 1 zeigt eine schematische Darstellung eines E-Papers, das durch eine Ausführungsform des erfindungsgemäßen Verfahrens bereitgestellt ist,
Figur 2 zeigt in schematischer Darstellung ein Ausführungsbeispiel des erfindungsgemäßen Verfahrens,
Figur 3 zeigt in schematischer Darstellung ein System gemäß einem Ausführungsbeispiel der Erfindung.

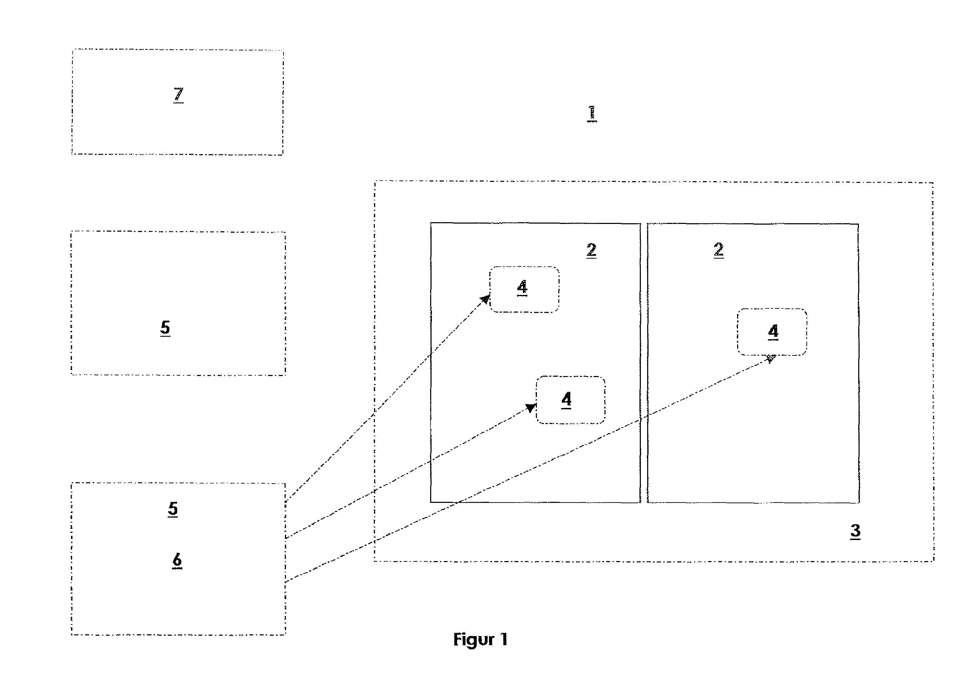

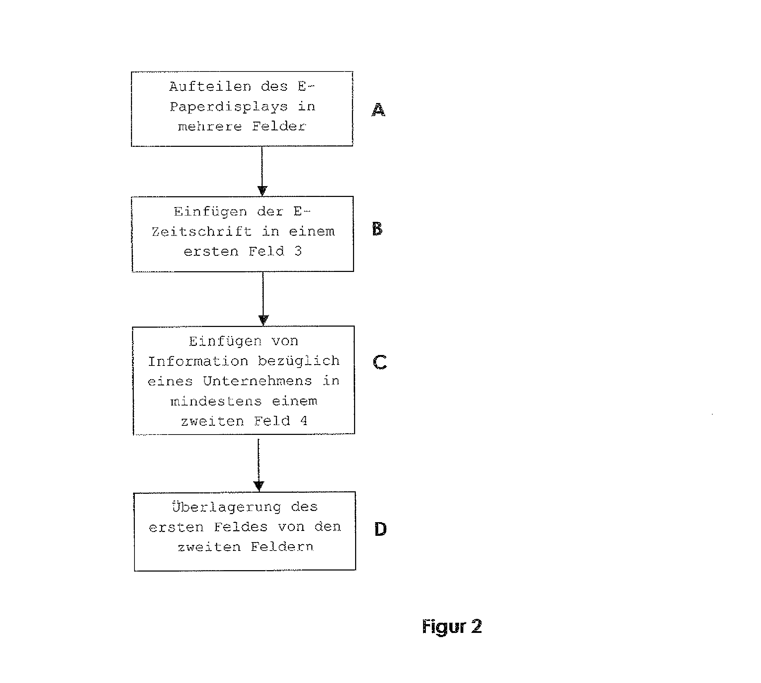

Beginnend mit den ersten zwei Figuren, zeigt die Figur 1 eine schematische Darstellung eines E-Papers 1, das durch eine Ausführungsform des erfindungsgemäßen Verfahrens bereitgestellt ist, und die Figur 2 ein Verfahren zur Ermöglichung einer verbesserten Darstellung von Informationen in einem E-Paper 1 zeigt, das eine E-Zeitschrift 2 mit umblätterbaren Seiten beinhaltet.

Wie oben erläutert, ist es wünschenswert für ein Unternehmen, aus dem Ansehen einer Zeitschrift, Fachzeitschrift, Zeitung oder Ähnlichem Vorteil zu ziehen, um den Ruf des Unternehmens oder seiner Produkte oder Dienste zu verbessern. In diesem Fall stellt z.B. der Verlag der Zeitschrift, Fachzeitschrift, Zeitung oder Ähnliches eine elektronische Ausgabe (E-Zeitschrift 2) derselben bereit. Die Erzeugung des E-Papers 1 umfasst die Schritte A bis D in der Figur 2. Bei dem ersten Schritt A wird die Darstellung des E-Papers 1 auf einem Display auf mehrere Felder 3, 4, 5 verteilt. Im zweiten Schritt B wird die E-Zeitschrift 2 in ein erstes Feld 3 gestellt.

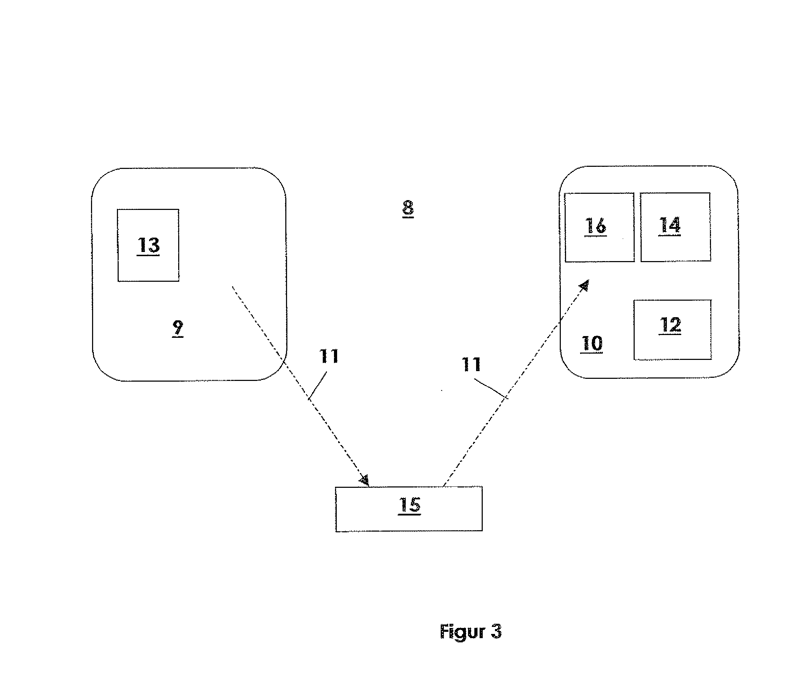

Nachdem die E-Zeitschrift 2 in das Feld 3 eingefügt wurde, kann die E-Zeitschrift 2 nicht geändert werden, so dass das Urheberrecht der E-Zeitschrift 2 geschützt ist. Die E-Zeitschrift 2 kann von dem Empfänger des E-Papers 1 nicht manipuliert werden. Die E-Zeitschrift 2 erscheint wie eine echte gedruckte Zeitschrift, Fachzeitschrift, Zeitung oder Ähnliches auf einem Bildschirm. Die Darstellung des E-Papers 1 auf einem Display oder Bildschirm erfolgt durch ein Computerprogramm, das über eine Datenleitung z.B. über das Internet als E-Mail gesendet wird, und das von einem Datenprozessor eines empfangenden Computersystems 10 (vgl. in der Figur 3) verarbeitet wird, so dass das E-Paper 1 auf einem Bildschirm dargestellt werden kann. Ein Datenträger des E-Mail empfangenden Computersystems 10 (vgl. z.B. Figur 3) kann mit einem Computerprogramm ausgerüstet sein, das von einem Datenprozessor verarbeitet wird, so dass die E-Zeitschrift 2 im E-Paper 1 mittels geeigneter Tools, z.B. "Javascript" oder "Cascading Style Sheets", interaktiv wird. Hierbei werden die Seiten der E-Zeitschrift 2 umblätterbar, z.B. mit einem Mausklick. Dies ermöglicht, die Seiten der E-Zeitschrift 2 wie echte gedruckte Seiten erscheinen zu lassen. Die E-Zeitschrift 2 kann aber auch das Aussehen und die Funktionaltät einer herkömmlichen E-Zeitschrift haben. Die E-Mail kann selbst das Programm beinhalten, das es ermöglicht, die E-Zeitschrift 2 interaktiv auf einem Bildschirm 12 (vg. Z.B. Figur 3) darzustellen.

Das E-Paper 1 wird mit mindestens einem zweiten Feld 4 versehen. In der Ausführungsform in der Figur 1 gibt es sechs zweite Felder 4. Ein Computerprogrammcode ist vorgesehen, der von einem Datenprozessor verarbeitet wird, so dass das erste Feld 3 im Schritt D wenigstens teilweise von den zweiten Feldern 4 überlagert wird. Der Hersteller der E-Zeitschrift 2 fügt vorzugsweise Information in diese zweiten Felder 4 (Schritt C) bezüglich eines Unternehmens ein, das die Zeitschrift 2 als Referenz nutzen möchte, d.h. das Ansehen der Zeitschrift 2 kann den Ruf des Unternehmens oder seiner Produkt oder Dienste verbessern. Die Information in diesen zweiten Feldern 4 kann in Form von Text, Bild, Graphik, Video, Audio oder einer Kombination derselben sein. Die zweiten Felder 4 können auf dem Display 12 so ausgestaltet werden, dass sie die Aufmerksamkeit auf einen bestimmten Teil einer Seite der E-Zeitschrift 2 lenken, der Information über das Unternehmen oder andere, zu den Geschäftsfeldern des Unternehmens passende Themen enthält. Die zweiten Felder 4 beinhalten Information über das Unternehmen, die das Unternehmen seinem Kunden oder einem potentiellen Kunden geben will.

Vorzugsweise wird ein Computerprogrammcode vorgesehen, der von einem Datenprozessor verarbeitet wird, wobei der Computerprogrammcode Schritte umfasst, den Inhalt des ersten Feldes 3, d.h. die E-Zeitschrift 2, zumindest teilweise auszublenden bzw. in den Hintergrund treten zu lassen. Infolgedessen wird die Information bezüglich des Unternehmens in den zweiten Feldern 4 prominent oder vordergründig erscheinen. Folglich wird die Aufmerksamkeit potenzieller Kunden schneller auf die wichtige Information gerichtet.

Ferner kann das E-Paper 1 mindestens ein drittes Feld 5 umfassen. In der Ausführungsform entsprechend der Figur 1 gibt es zwei dritte Felder 5. Auf einem Display sind diese dritten Felder 5 außerhalb des ersten Feldes 3 positioniert, d.h. sie überlagern das erste Feld 3 nicht. Diese dritten Felder 5 beinhalten vorzugsweise auch Information über das Unternehmen oder seine Produkte oder Dienste. Der Hersteller des E-Papers 1 wird z.B. in eines der dritten Felder 5 ein Logo oder eine Marke 6 bzw. Produkte oder Dienste eines Unternehmens einfügen, das er präsentieren will. Beispielsweise kann dieses Logo-Feld 5 bzw. 6 konstant bleiben, d.h. bei allen Seiten oder Doppelseiten der E-Zeitschrift 2 den gleichen Inhalt darstellen. Insbesondere ist eine Ausführungsform denkbar, bei der die zweiten Felder 4 von einem der dritten Felder 5, insbesondere vom konstanten Logo-Feld 5,6 ausgehen, das dann quasi als Quelle weiterer Informationen dient, die in den zweiten Feldern 4 dargestellt werden. Dabei können sich diese zweiten Felder 4 entsprechend den eingezeichneten Pfeilen vom stationären und konstanten Logo-Feld 5,6 ausbreiten und auf das erste Feld 3 verschieben, wobei sie sich entsprechend vergrößern können. Derartige A-nimationen können die Aufmerksamkeit des potenziellen Kunden von dem Logo beinhaltenden dritten Feld 5 auf die zweiten Felder 4 lenken, die das die E-Zeitschrift 2 beinhaltende erste Feld 3 zumindest teilweise überlagern. Ein viertes Informationsfeld 7 außerhalb des ersten Feldes 3 kann vorgesehen sein, das mit Information bezüglich des Herstellers des E-Papers 1 ausgestattet sein kann. Insbesondere kann dieses vierte Feld konstant sein und stets die gleiche Inforation darstellen, z.B. den Titel bzw. die Titelmarke der E-Zeitschrift 2, die im ersten Feld dargestellt wird.

Im zweiten Feld 4 kann der Hintergrund durchsichtig sein, so dass auf einem Bildschirm die E-Zeitschrift 2 im ersten Feld 3 hinter der im zweiten Feld 4 gegebenen Information bezüglich des Unternehmens sichtbar ist. Hierdurch wird quasi ein Abblenden der Inhalte der E-Zeitschrift 2 zu Gunsten der spezifischen Informationen (zweite Felder 4) des präsentierten Unternehmens erreicht.

Das Verfahren zur Überlagerung der E-Zeitschrift 2 mit umblätterbaren Seiten mit mindestens einem zweiten Informationsfeld 4, ermöglicht es einem Kunden oder einem Benutzer des E-Papers 1 die wichtige Information schneller zu finden und gleichzeitig die Funktionalität der E-Zeitschrift 2 zu erhalten, d.h. die Seiten können umgeblättert werden, bevorzugt erst dann, wenn die zusätzlichen spezifischen Informationen (zweite Felder 4) des Unternehmens beendet sind bzw. wenn eine die zweiten Felder 4 aufbauende Animation abgelaufen ist. Dabei ist vorzugsweise jeder Seite bzw. jeder Doppelseite der E-Zeitschrift 2 eine vorbestimmte Animation zum Aufbau der zweiten Felder 4 sowie gegebenenfalls variabler dritter Felder 5 zugeordnet.

Gemäß einer bevorzugten Ausführungsform kann die Darstellung der E-Zeitschrift 2 am Display 12 gleichzeitig mit der Abstrahlung einer Audioinformation realisiert werden. Die Abstrahlung dieser hörbaren Information erfolgt zweckmäßig über Lautsprecher, die bei modernen Bildschirmen 12 in diesen integriert sind. Ebenso kann die Abstrahlung über separate Lautsprecher erfolgen, die vom jeweiligen Computer über eine entsprechende Soundkarte angesteuert werden. Die der E-Zeitschrift 2 zugeordnete Audioinformation kann beispielsweise durch eine neutrale Hintergrundmusik gebildet sein. Darüberhinaus kann nun dem wenigstens einen zweiten Feld 4 ebenfalls eine Audioinformation zugeordnet werden, die gleichzeitig mit der Darstellung einer visuellen Information des jeweiligen zweiten Feldes 4 abgestrahlt wird. Beim Übergang von der Darstellung der allgemeinen visuellen Information der E-Zeitschrift 2 auf die Darstellung der speziellen visuellen Information des jeweiligen zweiten Feldes 4 kann - wie vorstehend bereits erläutert - die E-Zeitschrift 2 so weit ausgeblendet bzw. abgeblendet werden, bis das jeweilige, sich aufbauende zweite Feld 4 im Vordergrund dargestellt wird. Die dem jeweiligen zweiten Feld 4 zugeordnete, visuelle, spezielle Information tritt dadurch in den Vordergrund, während die visuelle, allgemeine Information der E-Zeitschrift 2 in den Hintergrund tritt, dabei jedoch immer noch sichtbar bleibt. Die E-Zeitschrift ist nach wie vor vorhanden und als solches erkennbar. Die E-Zeitschrift 2 bildet somit den Hintergrund der Gesamtdarstellung mit zumindest einem vordergründigen zweiten Feld 4. Mit diesem Einblenden des jeweiligen zweiten Feldes 4 im Vordergrund und dem Ausblenden der E-Zeitschrift 2 in den Hintergrund kann gleichzeitig die dem jeweiligen zweiten Feld 4 zugeordnete Audioinformation vordergründig abgestrahlt werden, während die der E-Zeitschrift 2 zugeordnete Audioinformation dann nur noch im Hintergrund abgestrahlt wird. Auch hier erfolgt ein teilweises Ausblenden der Audioinformation, die der E-Zeitschrift 2 zugeordnet ist, jedoch so, dass diese Audioinformation im Hintergrund hörbar bleibt. Durch diese Vorgehensweise wird der Betrachter kombiniert audio-visuell angesprochen, was die Konzentration auf die wichtige Information erleichtert. Der Nutzer kann dadurch die ihm präsentierte Informationsfülle besser sortieren, verarbeiten und merken. Dies ist sowohl im Sinne des Versenders des E-Papers 1 als auch im Sinne des Empfängers. Der Versender erreicht dadurch eine erhöhte Akzeptanz der übermittelten Informationen, während der Empfänger in kürzerer Zeit mehr Informationen aufnehmen kann. Insbesondere sinkt auf der Empfängerseite dadurch die Hemmschwelle, derartige E-Paper 1 zu lesen.

Während der Zusammensetzung des E-Papers 1 kann jede Seite bzw. Doppelseite der E-Zeitschrift 2 mit unterschiedlichen zweiten Informationsfeldern 4 versehen sein. Die zweiten Felder 4 sind insoweit variable Felder 4, da sie variierende Inhalte aufweisen können. Im Unterschied zu konstanten Feldern, die bei jeder Doppelseite des E-Zeitschrift 2 die gleiche Information wiedergeben. Als Beispiele seien das oben erwähnte Logo-Feld 5,6 und das Titel-Feld 7 genannt. Das erste Feld 3 und das wenigstens eine zweite Feld 4 werden so verbunden, dass, wenn der Benutzer des E-Papers 1 eine Seite umblättert, unterschiedliche Informationsfelder 4 auf den verschiedenen Seiten der E-Zeitschrift 2 überlagert werden. Die Information in den zweiten Feldern 4 kann deshalb auf jede Seite der E-Zeitschrift 2 zugeschnitten werden. Des Weiteren kann das durch das E-Paper 1 präsentierte Unternehmen aus Beiträgen von z.B. älteren/mehreren Heften eine neue E-Zeitschrift zusammensetzen (Sonderausgabe, spezial), wobei alle Beiträge unveränderte Originale sind, neutrale Themen beinhalten und/oder Information über das Unternehmen beinhalten. Diese neue E-Zeitschrift 2 mit umblätterbaren Seiten wird danach gemäß dem ausgeführten Verfahren mit den zweiten Informationsfeldern 4 überlagert. In einer Weiterbildung der Erfindung wird während der Zusammensetzung des E-Papers 1 die Zeitschrift teilweise mit leeren Seiten versehen, bei denen nur die zweiten Informationsfelder 4 erscheinen.

Bei einer bevorzugten Weiterbildung kann das E-Paper 1 außerdem mit einem Response-Tool ausgestattet sein. Dieses kann insbesondere die letzte Seite oder Doppelseite der E-Zeitschrift 2 bilden. Das Response-Tool fordert den Leser der E-Zeitschrift 2, also z.B. den potentiellen Kunden des Versenders des E-Papers 1 auf, auf das E-Paper 1 zu reagieren. Beispielsweise kann der potentielle Kunde so an einem Preisausschreiben des Versendenden Unternehmens teilnehmen oder Kataloge oder dergleichen bestellen. Wenn der potentielle Kunde dies möchte, wird er z.B. durch einen entsprechenden Mausklick automatisch zu einem Formular geführt, in das er vorbestimmte Angaben entragen muss. Das Vollständig ausgefüllte Formular kann dann, ebenfalls per Mausklick, an der Versender des E-Papers 1 elektronisch verschickt werden, beispielsweise als E-Mail. Hierbei kann das Response-Tool so ausgestaltet sein, dass alle gängigen E-Mail-Programme verwendbar sind, um das ausgefüllte Formular zu versenden.

Als weitere Option kann vorgesehen sein, eines der dritten Felder 5, z.B. das konstante Logo-Feld 5,6 auf der letzten Doppelseite der E-Zeitschrift 2, als Link auszugestalten, der z.B. durch einen Mausklick den Leser des E-Papers 1 automatisch zum Internetauftritt des Versenders des E-Papers 1 führt. Bevorzugt bleibt dieser Link jedoch solange inaktiv bzw. nicht erkennbar, solange das Formular des Response-Tools nicht an den Versender des E-Papers 1 zurückgeschickt worden ist.

Weitere Tools, die optional dem E-Paper 1 beigefügt werden können, sind z.B. ein Messe-Tool und ein Seminar-Tool. Das Messe-Tool kann beispielsweise automatisch Lagepläne für Messen generieren. Zum Beispiel hat der Leser des E-Papers 1 den Wunsch auf einer im E-Paper 1 vorgestellten Messe bestimmte Aussteller zu besuchen. Durch das Messe-Tool kann der Leser die gewünschten Aussteller eingeben und erhält dann automatisch die Lagepläne und Wegeweiser, um zu den gewünschten Ausstellen finden zu können. Das Seminar-Tool kann beispielsweise die Möglichkeit bieten, Auszüge eines Seminars als Video oder Skripte des Seminars ganz oder teilweise herunterzuladen, um so dem Leser des E-Papers 1 einen gewissen Eindruck des beworbenen Seminars zu vermitteln.

In einer Weiterbildung der Erfindung wird auch ein Computerprogrammcode vorgesehen, der von einem Datenprozessor verarbeitet wird, so dass die Information in dem zweiten Feld 4 unsichtbar wird, nachdem z.B. der Benutzer des E-Papers 1 auf einen bestimmten Teil des E-Paperdisplays 12 mit Hilfe einer Maus oder einer beliebigen anderen Cursorsteuerung klickt.

In der Figur 3 wird in schematischer Darstellung ein erfindungsgemäßes System 8 zur Ermöglichung einer verbesserten Darstellung von Information in einem E-Paper 1 gezeigt, das eine E-Zeitschrift 2 mit umblätterbaren Seiten beinhält. Das System 8 umfasst ein Sendercomputersystem 9, ein empfangendes Computersystem 10 und eine dazwischen liegende Datenleitung oder Verbindung 11. Eine ein Computerprogramm beinhaltende E-Mail wird von einer Datensendereinheit 13 des Sendercomputersystems 9 an eine Datenempfängereinheit 14 des empfangenden Computersystems 10 über die Datenleitung 11 gesendet. Die Datenleitung 11 kann über das Internet via Server bestehen. Das Computerprogramm ist mit einem Programmcode zur Darstellung des E-Papers 1 auf einem Displaygerät 12 versehen, wobei der Programmcode von einem Datenprozessor des empfangenden Computersystems 10 verarbeitet wird.

Das Computerprogramm ist mit einem Programmcode versehen, der Schritte zur Aufteilung des E-Paperdisplays 12 in mehrere Felder aufweist. Die E-Zeitschrift 2 wird in ein erstes Feld 3 und die Information bezüglich eines Unternehmens in mindestens ein zweites Feld 4 vorprogrammiert. Der Programmcode umfasst ferner die Schritte zur zumindest teilweise Überlagerung des ersten Feldes 3 mit dem mindestens einen zweiten Feld 4. Ein Speicherplatz 16 des empfangenden Computersystems 10 kann auch mit einem Programmcode versehen sein, der von dem Datenprozessor des empfangenden Computersystems verarbeitet wird, so dass die E-Zeitschrift 2 im E-Paper 1 mittels Tools z.B. "Javascript" oder "Cascading Style Sheets" interaktiv wird, d.h. die E-Zeitschrift mit einem Mausklick umgeblättert werden kann. Das E-Mail selbst kann den Programmcode beinhalten, der es ermöglicht das E-Paper 1 auf den Display 12 des empfangenden Computersystems darzustellen.

Vorzugsweise umfasst der Programmcode zur Darstellung eines E-Papers 1 auf einem Displaygerät 12 Schritte, bei denen die E-Zeitschrift 2 im ersten Feld 3 völlig oder teilweise ausgeblendet wird, so dass die Information in dem mindestens einen zweiten Feld 4 auf einem Display 12 prominent dargestellt ist. Vorzugsweise umfasst der Programmcode auch Schritte zur Verbindung des ersten Feldes 3 und der zweiten Felder 4, so dass, wenn der Benutzer des E-Papers 1 eine Seite der E-Zeitschrift 2 umblättert, unterschiedliche Informationen auf den zweiten Feldern 4 dargestellt und die verschiedenen Seiten der E-Zeitschrift 2 unterschiedlich im ersten Feld 3 überlagert werden.

Die vorhergehende Beschreibung der Ausführungsbeispiele gemäß der vorliegenden Erfindung dient nur zu illustrativen Zwecken und nicht zum Zwecke der Beschränkung der Erfindung. Insbesondere im Hinblick auf einige bevorzugte Ausführungsbeispiele entnimmt ihr der Fachmann, dass verschiedene Änderungen und Modifikationen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

## Patentansprüche

1. Betriebsverfahren für eine Datenverarbeitungsanlage zur Ermöglichung einer verbesserten Darstellung von Information in einem E-Paper (1), das eine E-Zeitschrift (2) mit umblätterbaren Seiten beinhaltet, wobei das E-Paper (1) über eine Datenleitung (11) oder über das Internet gesendet werden kann und von einem Datenprozessor verarbeitet wird, so dass es auf einem Display (12) eines E-Paper empfangenden Computersystems (10) dargestellt werden kann, wobei das Verfahren das Aufteilen des E-Paperdisplays (12) in mehrere Felder umfasst, wonach die E-Zeitschrift (2) in einem ersten Feld (3) eingefügt wird und mindestens ein zweites Feld (4) zur Darstellung von Information bezüglich eines Unternehmens vorgesehen wird, wobei das erste Feld (3) von dem mindestens einen zweiten Feld (4) wenigstens teilweise überlagert wird.

2. Verfahren nach Anspruch 1,
**dadurch gekennzeichnet,**
**dass** die E-Zeitschrift (2) völlig oder teilweise ausgeblendet wird, so dass die Information in dem mindestens einen zweiten Feld (4) auf dem Display (12) prominent dargestellt wird.

3. Verfahren nach einem der vorhergehenden Ansprüche,
**dadurch gekennzeichnet,**
**dass** die E-Zeitschrift (2) soweit ausgeblendet wird, dass das wenigstens eine zweite Feld (4) auf dem Display (12) vordergründig dargestellt wird, während die E-Zeitschrift (2) hintergründig dargestellt wird.

4. Verfahren nach einem der vorhergehenden Ansprüche,
**dadurch gekennzeichnet,**
**dass** das E-Paper (1) mit mindestens einem dritten Feld (5) versehen ist, das außerhalb des ersten Feldes (3) angeordnet ist.

5. Verfahren nach einem der vorhergehenden Ansprüche,
**dadurch gekennzeichnet,**
**dass** die Information im wenigstens einen zweiten Feld (4) und/oder im wenigstens einen dritten Feld (5) in Form von Text, Bild, Graphik, Video, Audio oder einer Kombination derselben ist.

6. Verfahren nach einem der vorhergehenden Ansprüche,
**dadurch gekennzeichnet,**
- **dass** die Darstellung der E-Zeitschrift (2) gleichzeitig mit der Abstrahlung einer Audioinformation erfolgt,
- **dass** die Darstellung des wenigstens einen zweiten Felds (4) gleichzeitig mit der Abstrahlung einer anderen Audioinformation erfolgt,
- **dass** die der E-Zeitschrift (2) zugeordnete Audioinformation beim Darstellen des wenigstens einen zweiten Felds (4) soweit ausgeblendet wird, dass die dem wenigstens einen zweiten Feld (4) zugeordnete Audioinformation vordergründig abgestrahlt wird, während die der E-Zeitschrift (2) zugeordnete Audioinformation hintergründig abgestrahlt wird.

7. Verfahren nach einem der vorhergehenden Ansprüche,
**dadurch gekennzeichnet,**
- **dass** der Hintergrund des mindestens einen zweiten Feldes (4) durchlässig ist, so dass die E-Zeitschrift (2) hinter der im wenigstens einen zweiten Feld (4) gegebenen Information bezüglich des Unternehmens sichtbar ist, und/oder
- **dass** die Information im ersten Feld (3) unveränderbar ist, und/oder
- **dass** das erste Feld (3) und das wenigstens eine zweite Feld (4) verbunden sind, so dass die Information in dem mindestens einen zweiten Feld (4) automatisch verändert wird, wenn ein Benutzer des E-Papers (1) eine Seite der E-Zeitschrift (2) umblättert, und/oder
- **dass** die Information in dem mindestens einen zweiten Feld (4) auf Wunsch unsichtbar gemacht werden kann.

8. Verfahren nach einem der vorhergehenden Ansprüche,
**dadurch gekennzeichnet,**
**dass** ein Computerprogramm von einem Datenprozessor des empfangenden Computersystems (10) verarbeitet wird, wobei das Computerprogramm einen Computercode zur Darstellung der E-Zeitschrift (2) beinhaltet, und der Prozessor des empfangenden Computersystems den Computercode verarbeitet, so dass das Feld (3) zumindest teilweise von dem mindestens einen zweiten Feld (4) überlagert wird.

9. System zur Ermöglichung einer verbesserten Darstellung von Information in einem E-Paper (1), das eine E-Zeitschrift (2) mit umblätterbaren Seiten beinhaltet, bei dem das System ein Sendercomputersystem (9), ein empfangendes Computersystem (10) und eine dazwischen liegende Datenleitung (11) umfasst, wobei eine ein Computerprogramm beinhaltende E-Mail zur Darstellung des E-Papers (1) auf einem Display von einer Datensendereinheit des Sendercomputersystems (9) an eine Datenempfängereinheit des empfangenden Computersystems (10) über die Datenleitung (11) gesendet wird, bei dem das Computerprogramm einen Computercode beinhaltet, der von einem Datenprozessor des empfangenden Computersystems verarbeitet wird, wobei der Computercode den Schritt zur Verteilung des E-Paperdisplays (12) in mehrere Felder umfasst, und die E-Zeitschrift (2) in einem ersten Feld (3) und mindestens ein zweites Feld (4) zur Darstellung von Information bezüglich eines Unternehmens vorgesehen ist, wobei der Programcode den Schritt zur zumindest teilweise Überlagerung des ersten Feldes (3) von dem mindestens einen zweiten Feld (4) beinhaltet.

10. System nach Anspruch 9, **gekennzeichnet durch** die kennzeichnenden Merkmale wenigstens eines der Ansprüche 2 bis 8.

11. Computerprogramm zur Ermöglichung einer verbesserten Darstellung von Information in einem E-Paper (1), das eine E-Zeitschrift (2) mit umblätterbaren Seiten beinhaltet, bei dem das Computerprogramm einen Programmcode aufweist, der von einem Datenprozessor eines empfangenden Computersystems (10) verarbeitet wird, wobei der Computercode den Schritt zur Verteilung des E-Paperdisplays (12) in mehrere Felder umfasst, und die E-Zeitschrift (2) in einem ersten Feld (3) und mindestens ein zweites Feld (4) zur Darstellung von Information bezüglich eines Unternehmens vorgesehen ist, wobei der Programcode den Schritt zur zumindest teilweise Überlagerung des ersten Feldes (3) von dem mindestens einen zweiten Feld (4) beinhaltet.

12. Aufnahmemedium mit einem Programmcode zur Ermöglichung einer verbesserten Darstellung von Information in einem E-Paper (1), das eine E-Zeitschrift (2) mit umblätterbaren Seiten beinhaltet, bei dem der Programmcode von einem Datenprozessor eines empfangenden Computersystems (10) verarbeitet wird, wobei der Computercode den Schritt zur Verteilung des E-Paperdisplays (12) in mehrere Felder umfasst, und die E-Zeitschrift (2) in einem ersten Feld (3) und mindestens ein zweites Feld (4) zur Darstellung von Information bezüglich eines Unternehmens vorgesehen ist, wobei der Programcode den Schritt zur zumindest teilweise Überlagerung des ersten Feldes (3) von dem mindestens einen zweiten Feld (4) beinhaltet.
